# EUROPEAN PATENT APPLICATION

(11) **EP 0 800 773 A1**
(43) Date of publication of application: **15.10.1997**
(21) Application number: 97201034.2
(22) Date of filing: 14.04.1997
(51) Int. Cl.: A23L 1/216, A23P 1/12, B02C 4/24, B02C 4/04, B02C 18/30

(54) **A method of producing potato-based fast-foods**

(30) Priority: 17.04.1996 IT MI960733
(71) Applicant: VOMM CHEMIPHARMA S.r.l., 20121 Milano (IT)
(72) Inventor: Vezzani, Corrado, 20146 Milano (IT)
(74) Representative: Vannini, Torquato

(57) **Abstract**

The method described for producing mashed potato on an industrial scale comprises the steps of producing a raw potato pulp directly from previously washed and peeled raw potatoes and heating the raw potato pulp to a gel point of the starch contained therein for a period such that cooking is completed.

## Description

The present invention relates, in general, to a method of producing potato-based ready-to-eat cooked foods (so-called "fast-foods").

In particular, the invention relates to a method for the production, on an industrial scale, of mashed potato to be eaten as they are or to be seasoned and/or flavoured as desired, as well as for the production of fast-foods based on mashed potato of this type.

It is known that some (generally pre-cooked) food preparations which can be used for the more or less instant production of "mashed potato" seasoned and/or flavoured according to various recipes are available on the market.

It is also known that a clear deterioration in organoleptical properties, particularly palatability, is generally to be found in mashed potato produced in this manner, in comparison with freshly-prepared home-made mashed potato, with more or less obvious penalties with regard to taste and after-taste.

This seems to be attributable, in particular, to the fact that, in most cases, the aforementioned food preparations are not produced directly from potatoes but from intermediate products - so-called potato flakes - which are constituted essentially by dried potato pulp.

Moreover, the drying processes, methods and techniques currently available for producing potato flakes, particularly the temperatures and times involved, lead to oxidative phenomena in the product which inevitably adversely affect the organoleptical properties of the natural starting product.

Because of this problem, a great need is recognized, in the industrial fast-food production field, to be able to provide the consumer with mashed potato having the organoleptical qualities of fresh, home-cooked mashed potato.

Clearly this need can be satisfied by a production method which starts directly with fresh potatoes and not from any intermediate products produced therefrom.

However, it is not possible, for this purpose, to transfer to production on an industrial scale the most conventional culinary technique which is based essentially on the cooking, in boiling water (or in steam), of potatoes which, after they have been "peeled" hot, are passed through holes of suitably small dimensions.

In fact, since it is not possible to peel cooked potatoes hot by machine (as would normally be required for an industrial process) without loss of valuable product, it would be necessary to boil potatoes which have been peeled beforehand and which, to ensure the necessary uniformity of cooking, have been suitably cut up to a homogeneous size.

However, the boiling of already-peeled potatoes would involve, on the one hand, the loss, in the cooking water, of components which are valuable from the organoleptical and nutritional points of view and, on the other hand, the production of a greater or lesser quantity of waste water with a high COD value, with related serious disposal problems.

Moreover, another disadvantage would be constituted by the laboriousness, if not the actual difficulty of "mashing" the cooked potatoes hot since, in order to be effected industrially, this operation would have to be carried out with large flow rates and at fairly low pressures in order not to compromise the nature of the final product.

Furthermore, the time taken to implement the suggested industrial process, - washing, chopping, boiling, draining and mashing potatoes - would be unacceptably long.

It would also be possible to oven-bake the potatoes but, in addition to the fact that the uniformity of the baking of the potatoes could not be controlled, the inevitable formation of dry baked surface portions which would again be found in the final product makes this method impracticable.

0Up to now, it has also been impossible to propose the cooking of the potatoes by microwaves or similar heat sources because of the objective difficulty of ensuring uniform cooking of the potatoes owing to operative and control difficulties and complexity.

The problem upon which the present invention is based is consequently that of devising and providing a method which can be implemented on an industrial scale and which enables mashed potato to be produced directly from potatoes, in the form and in the conditions necessary to constitute a fast-food and/or the main component of a fast-food.

This problem is solved, according to the invention, by a method which comprises the steps of:
- producing a raw potato pulp directly from previously washed and peeled raw potatoes,
- heating the raw potato pulp to the gel point of the starch contained therein for a period such that cooking is completed.

For continuous industrial production, and to ensure that the potato pulp is cooked homogeneously and completely, according to another characteristic of the invention, the pulp is heated whilst being arranged and kept in the state of a thin layer.

Of the various possible methods of heating the thin layer of potato pulp, it is advantageous and preferred to advance the thin layer substantially in contact with a heated wall.

The temperature of the wall must be such that the potato pulp can reach the gel point of the starch contained therein and remain at this temperature until cooking is complete.

The best results, from the point of view of the uniformity and completion of the cooking of the potato pulp, are achieved when the thin layer of potato pulp is agitated constantly by continuous mixing as it advances along and in contact with the heated wall.

Successive and distinct portions of potato pulp thus contact the heat source (the heated wall) and are then, almost immediately, moved away from it in a rapid sequence of thermal shocks in order to be reincorporated in the mass of the thin layer with which they effect an exchange of heat.

Advantageously, the mass (potato pulp) constituting the thin layer is mixed mechanically.

It has been found that the moisture content of the potato pulp of the invention, which is equal to or, in any case, no greater than that of the potatoes from which it has been produced, is more than sufficient for the gelling of the starch contained therein. However, any desired additions of water during the gelling and cooking stage can be effected directly into the thin layer of potato pulp at any preselected moment during its movement along the heated wall.

A device known by the name of a turbo-cooker is advantageously used for implementing the method of the invention on an industrial scale. It comprises essentially a tubular, cylindrical body having a heated inner wall, and a bladed rotor which extends axially in the tubular, cylindrical body and the blades of which are arranged helically and have free ends almost touching the heated wall. The cylindrical body has one or more openings for the admission of the products to be processed and at least one opening for the discharge of the processed product.

With the use of a turbo-cooker of the aforementioned type, the method of the invention is characterized in that it comprises the steps of:
- mincing previously washed raw potatoes to produce a raw potato pulp,
- supplying a continuous flow of the raw potato pulp into a turbo-cooker which has an inner wall heated to a temperature of 120-250°C and in which the bladed rotor is rotated at 200-600 revolutions/minute,
- centrifuging the potato pulp against the heated wall by means of the bladed rotor, with the continuous formation of a thin, annular layer of potato pulp which is constantly agitated and mixed by the rotor blades,
- advancing the continuously-formed thin, annular layer through the cylindrical body substantially in contact with the inner wall thereof, again by means of the bladed rotor,
- heating the potato pulp of the thin layer to a gel point of the starch contained therein and for a period such that cooking is completed,
- continuously discharging a flow of cooked potato pulp from the turbo-cooker.

The product thus obtained - cooked potato pulp - does not yet constitute "mashed potato" in the traditional and conventionally known sense. In fact it lacks ingredients - such as, for example, flour, milk, salt, and butter - which, mixed intimately therewith, can confer the required properties of consistency, flavour and aroma.

The potato pulp cooked in accordance with the present invention may be considered an intermediate product in the preparation of conventional mashed potato. The addition and intimate mixing therewith of the ingredients mentioned above, or of others, in accordance with the widely varied culinary recipes for mashed potato (for example, margarine, various spices and suitable herbs or flavourings) may be carried out directly by the consumer. Alternatively and advantageously, the ingredients may be supplied directly into the turbo-cooker, simultaneously with the flow of potato pulp or at subsequent times.

The product discharged from the turbo-cooker is thus in all respects mashed potato wholly comparable with fresh home-made ones.

On an industrial production line, the mashed potato discharged hot from the turbo-cooker is metered and packaged in suitable containers and is immediately frozen in accordance with conventional techniques in order then to be distributed commercially in the so-called "cold chain".

The characteristics and advantages of the invention will become clearer from the following description of some embodiments of the above-mentioned method, the description being given with reference to the drawings provided by way of indication, in which:
Figure 1 shows schematically, in longitudinal section, a turbo-cooker used for implementing the method of the invention,
Figure 2 shows schematically apparatus for implementing the invention,
Figure 3 shows further apparatus for implementing a variant of the method of the invention.

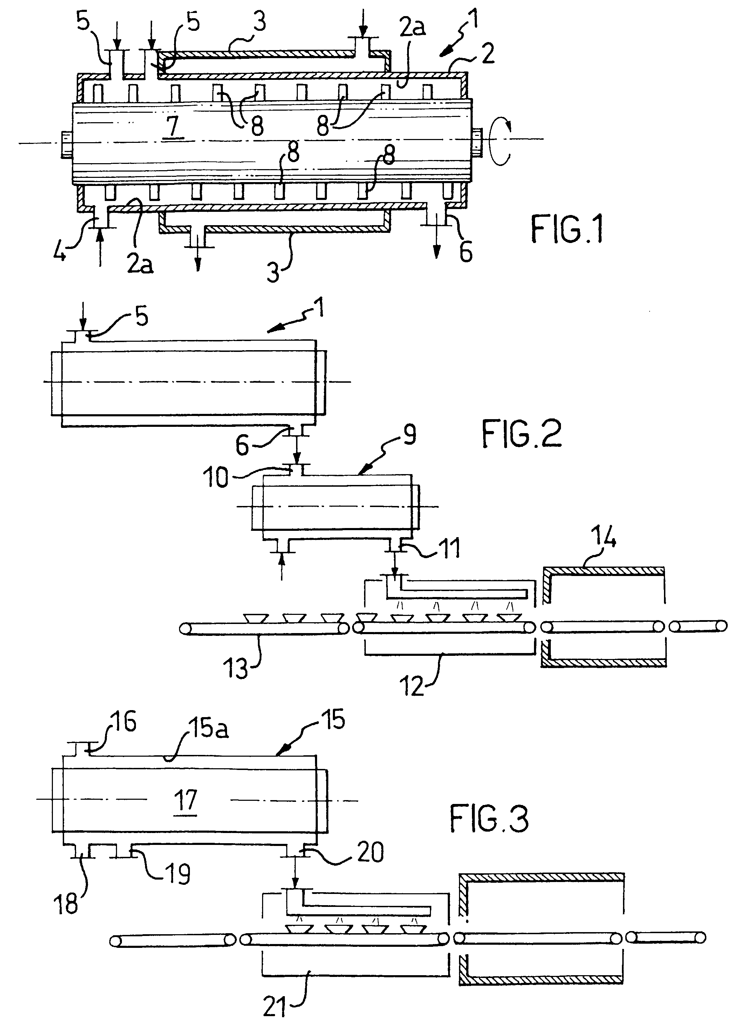

With reference to Figure 1, a turbo-cooker 1 comprises, essentially, a cylindrical, tubular body 2 with a horizontal axis, closed at its opposite ends and having a heating jacket 3 for keeping the inner wall 2a of the cylindrical body 2 at a predetermined temperature.

Openings for the admission of products to be processed to the turbo-cooker 1 are indicated 4 and 5 and an opening for the discharge of the processed product is indicated 6.

A motor-driven, bladed rotor 7 is mounted axially in the cylindrical, tubular body 2, its blades 8, which extend radially, being disposed in a helical arrangement and having free ends almost touching the inner wall 2a of the cylindrical body.

The apparatus of Figure 2 comprises a turbo-cooker 1 of the type described above and a turbo-mixer 9, the structural characteristics of which are wholly identical to those of the turbo-cooker and will not therefore be described further.

The discharge opening 6 of the turbo-cooker 1 is connected to an inlet opening 10 of the turbo-mixer and the discharge opening 11 of the turbo-mixer is connected to a station 12 for metering the processed product into predetermined packages (not shown) supplied thereto, for example, by a conveyor 13. This station 12 is advantageously and preferably constructed for sterile operation.

A freezing tunnel 14 shown schematically downstream of the station 12 and in communication therewith is of conventional type and is therefore not described in detail.

### EXAMPLE 1

Potatoes washed and peeled by wholly conventional techniques and apparatus were minced mechanically, when cold, to produce a raw potato pulp in which the moisture content was still that of the starting potatoes.

This potato pulp was supplied to the turbo-cooker 1 in a continuous flow through the input opening 5. The inner wall 2a of the turbo-cooker was kept at a temperature of 180°C and the bladed rotor 7 was rotated at a speed of 450 revolutions/minute.

Immediately upon admission, the raw potato pulp was centrifuged against the heated wall 2a by the rotor 7 with the (continuous) formation of a thin, annular layer.

The helical arrangement of the blades 8 of the bladed rotor and their orientation was such that the thin, annular layer of potato pulp was continuously urged along the heated wall towards the discharge opening 6. At the same time, the potato pulp of the thin layer was continuously mixed and kept in a continuous state of agitation by the action of the blades.

As it passed through the turbo-cooker 1, the potato pulp underwent rapid and gradual heating to the gel point (about 70°C) of the starch contained therein and cooking was completed after a period of 4 minutes spent in the turbo-cooker.

A continuous flow of fully cooked potato pulp was discharged from the opening 6 of the turbo-cooker 1 at a temperature of 68-70°C.

This intermediate product (cooked potato pulp) was then supplied, again continuously, into the turbo-mixer 9 through its input openings 10.

The inner wall of the turbo-mixer 9 was kept at a temperature of 60°C and the bladed rotor was rotated at 120 revolutions/minute.

Simultaneously with the flow of the intermediate product, metered (independent or non-independent) flows of flour, milk, butter and salt, rendered pumpable by conventional techniques, were introduced into the turbo-mixer 9.

After a period of 2 minutes spent in the turbo-mixer 9, a continuous flow of cooked and seasoned mashed potato, exactly like freshly-prepared home-made mashed potato. was discharged therefrom.

The flow of the product discharged from the turbo-mixer 9 was supplied continuously to the metering and packaging station 12 and the metered packages of the product were then subjected to rapid freezing in the tunnel 12.

At the output of the freezing tunnel 12 the packages (fast food) were ready for sale (cold chain) or for storage.

After they had been kept in the frozen state for 4 months, some of the packages were opened and the frozen mashed potato were gradually brought to a temperature of 40°C. Upon tasting, it was found that the organoleptical characteristics and consistency which the mashed potato produced by the method of the invention had when freshly prepared had remained unchanged.

### EXAMPLE 2

A potato pulp produced by the mincing of suitably washed and peeled potatoes was supplied to a turbo-cooker 15 (Figure 3) in a continuous flow through the inlet opening 16 thereof. The inner wall 15a of the turbo-cooker was kept at a temperature of 200°C and the bladed rotor 17 was rotated at a speed of 360 revolutions/minute.

Metered flows of preselected ingredients, for example, flour, milk, salt and butter, were supplied into the cooker tube through the openings 18, 19 thereof, simultaneously with the flow of potato pulp.

After a period of 5 minutes spent in the turbo-cooker 14, a continuous flow of mashed potato was discharged from its discharge opening 20 at a temperature of 65°C.

Upon tasting, this product had the same organoleptical properties and the same consistency as the mashed potato produced at the output of the turbo-mixer 9 of Example 1.

In this case also, the mashed potatoes discharged from the turbo-cooker 15 were supplied directly to a metering and packaging station 21 and were then subjected to fast freezing.

### EXAMPLE 3

Raw potatoes suitably washed and peeled were cut into coarse pieces in a conventional chopping machine.

A continuous flow of these potato pieces was supplied continuously to a turbo-cooker 14 (Figure 3) through the inlet opening 15.

Immediately upon admission to the turbo-cooker 15, the potato pieces were picked up by the blades of the bladed rotor and were minced thereby, producing a potato pulp entirely comparable with that produced by mincing in the preceding examples. The centrifugal effect of the bladed rotor on this pulp became predominant, with the consequent formation of a thin, annular layer in contact with the heated wall of the turbo-cooker 15.

Metered (independent or non-independent) flows of flour, milk, butter and salt were simultaneously admitted to the turbo-cooker 15. After a period of 7 minutes spent in the turbo-cooker 15, mashed potato was discharged therefrom and, upon tasting, had organoleptical properties and a consistency just the same as that of the mashed potato produced in the preceding example.

The intermediate product (cooked potato pulp) produced by the turbo-cooker 1 of Example 1 can be "prepared" in various ways according to the culinary recipes to be implemented. This preparation may be carried out directly by the consumer (or by someone for him) or, with an entirely similar result, in a turbo-mixer 9 of the type mentioned with reference to Figure 2, at the output of which the mashed potato is metered to form "fast-food" which is packaged and sent for freezing.

The invention thus conceived which, fundamentally, is based on the characteristics of the production of a raw potato pulp directly from potatoes and the cooking of the pulp in a thin layer, may be varied and modified with regard to the manner of its implementation, without thereby departing from the scope of its protection defined by the following claims.

## Claims

1. A method of producing mashed potato on an industrial scale, characterized in that it comprises the steps of:
- producing a raw potato pulp directly from previously washed and peeled raw potatoes,
- heating the raw potato pulp to the gel point of the starch contained therein for a period such that cooking is completed.

2. A method according to Claim 1, characterized in that the raw potato pulp is heated with the potato pulp arranged in the state of a thin layer.

3. A method according to Claim 2, characterized in that the thin layer of potato pulp is advanced substantially in contact with a wall heated to a gel point of the starch contained in the pulp and for a period such that cooking thereof is completed.

4. A method according to Claim 3, characterized in that the potato pulp of the thin layer is agitated constantly by continuous mixing during its advance along and in contact with the heated wall.

5. A method according to Claim 4, characterized in that the potato pulp of the thin layer is mixed mechanically.

6. A method of producing mashed potato on an industrial scale, characterized in that it comprises the steps of:
- mincing previously washed and peeled raw potatoes to produce a raw potato pulp,
- supplying a continuous flow of the raw potato pulp into a turbo-cooker which has an inner wall heated to a temperature of 120-250°C and in which a bladed rotor is rotated at 200-600 revolutions/minute,
- centrifuging the potato pulp against the heated wall by means of the bladed rotor, with the continuous formation of a thin, annular layer of the potato pulp which is constantly agitated and mixed by the rotor blades,
- advancing the continuously-formed, thin, annular layer along the cylindrical body of the turbo-cooker substantially in contact with the inner wall thereof, again by means of the bladed rotor,
- heating the potato pulp of the thin layer to a gel point of the starch contained therein and for a period such that cooking is completed,
- continuously discharging a flow of cooked potato pulp from the turbo-cooker.

7. A method according to Claim 6, characterized in that it further comprises the steps of:
- continuously supplying the flow of cooked potato pulp discharged from the turbo-cooker into a turbo-mixer simultaneously with metered flows of ingredients comprising flour, milk, salt, butter, margarine, spices, herbs and flavourings which have been rendered pumpable,
- discharging from the turbo-mixer a continuous flow of mashed potato thus obtained,
- metering the mashed potato into sealed packages and subjecting the packages to freezing.

8. A method according to Claim 6, characterized in that flows of ingredients such as flour, milk, salt, butter and the like are supplied to the turbo-cooker simultaneously with the flow of raw potato pulp, a continuous flow of mashed potato being discharged from the turbo-cooker.
